## Europäisches Patentamt

## European Patent Office

## Office européen des brevets

(19)

(11) Veröffentlichungsnummer: **0 180 742**
**B1**

(12)

# EUROPÄISCHE PATENTSCHRIFT

(45) Veröffentlichungstag der Patentschrift:
26.07.89

(51) Int. Cl.⁴: **B 27 B  17/12**

(21) Anmeldenummer: **85111657.4**

(22) Anmeldetag: **14.09.85**

(54) Automatische Schmiervorrichtung für eine durch einen Elektromotor angetriebene Kettensäge.

(30) Priorität: **08.11.84  DE 8432724 U**

(43) Veröffentlichungstag der Anmeldung:
**14.05.86 Patentblatt 86/20**

(45) Bekanntmachung des Hinweises auf die Patenterteilung:
**26.07.89 Patentblatt 89/30**

(84) Benannte Vertragsstaaten:
**DE FR GB IT SE**

(56) Entgegenhaltungen:
**DE-A- 1 453 173**
**DE-A- 3 214 270**

(73) Patentinhaber: **Licentia Patent-Verwaltungs-GmbH,
Theodor-Stern-Kai 1, D-6000 Frankfurt/Main 70 (DE)**

(72) Erfinder: **Henning, Volker, Dipl.-Ing. FH., Edewechter
Landstrasse 79e, D-2900 Oldenburg (DE)**
Erfinder: **Bartels, Joachim, Holunderweg 15, D-2903 Bad
Zwischenahn (DE)**
Erfinder: **Baumann, Günter, Friesenstrasse 53,
D-2900 Oldenburg (DE)**
Erfinder: **Burow, Günter, Dipl.-Ing.,
Ammergaustrasse 109 A, D-2900 Oldenburg (DE)**

(74) Vertreter: **Lertes, Kurt, Dr. et al, Licentia
Patent-Verwaltungs-GmbH Theodor-Stern-Kai 1,
D-6000 Frankfurt/M 70 (DE)**

## Beschreibung

Die Erfindung bezieht sich auf eine Anordnung der im Oberbegriff des Anspruchs 1 bezeichneten und nach der DE-A-32 14 270 bekannten Art.

Dabei wird die Schmierstoffzufuhr von einem Überdruck bewirkt, welcher durch die vom Motor geförderte Kühlluft erzeugt wird. Bei Verschmutzung können Störungen eintreten.

Der Erfindung liegt die Aufgabe zugrunde, die Schmierstoffzufuhr zu sichern.

Die Lösung gelingt durch die im Anspruch 1 gekennzeichneten Merkmale. Vorteilhafte Weiterbildungen sind in den Unteransprüchen gekennzeichnet.

Die Erregerwicklung des Magnetventils kann vom Motorstrom durchflossen sein, wobei dann relativ wenige Windungen zur Erzeugung ausreichender Betätigungskräfte genügen. Diese Windungen können von einer isolierten elektrischen Zuleitung zum Motor gebildet werden.

Unabhängigkeit vom jeweils verwendeten Motor erreicht man, wenn die Wicklung an die Motorspannung oder an eine Teilspannung des Motors, z.B. parallel zur Feldwicklung eines Reihenschlussmotors angeschlossen ist.

In den genannten Fällen öffnet das Magnetventil, sobald der Einschalter der Kettensäge betätigt wird. Die Schmiermittelförderung wird automatisch mit dem Abschalten unterbrochen.

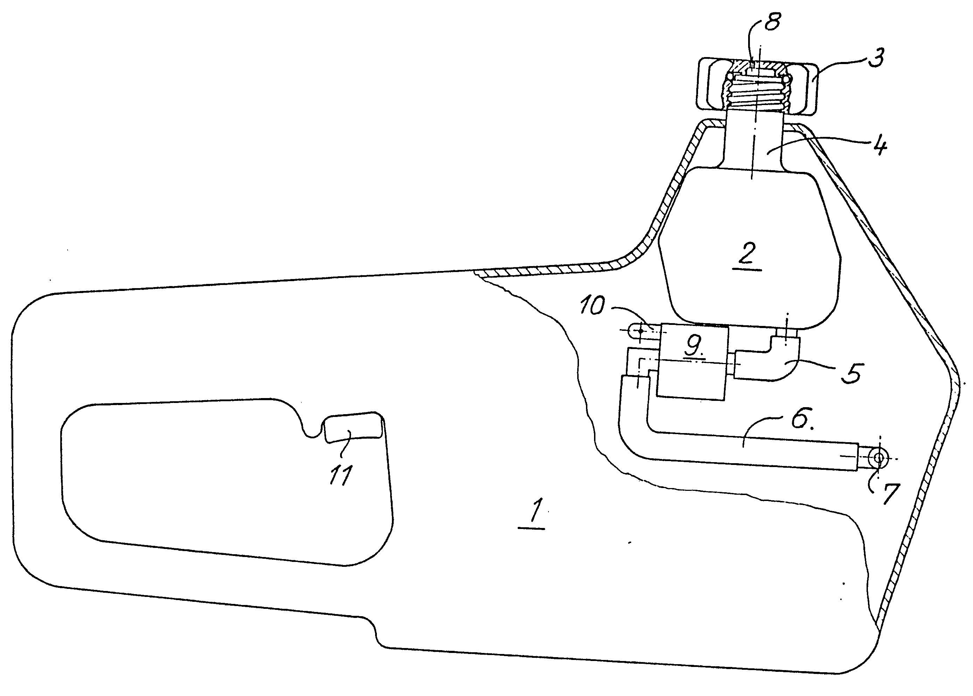

Ein Ausführungsbeispiel der Erfindung ist in der Figur dargestellt, welche die Seitenansicht eines teilweise geschnittenen Gehäuses einer Kettensäge zeigt.

Im aufgeschnittenen Bereich des Gehäuses 1 ist der Schmierstoffvorratsbehälter 2 erkennbar, welcher über die durch einen Schraubdeckel 3 verschlossene Öffnung 4 füllbar ist. Der Schmierstoff wird durch die Abschnitte 5 und 6 der Schmierstoffleitung zur Austrittsöffnung 7 in die Nachbarschaft der nicht dargestellten Kette geleitet. Als Förderdruck wirkt die Schwerkraft. Die Ausgleichsöffnung 8 im Schraubdeckel 3 verhindert das Entstehen eines Unterdrucks im Schmierstoffvorratsbehälter 2 gegenüber dem Atmosphärendruck. Der Förderdruck kann verstärkt werden, wenn die Ausgleichsöffnung in einen Raum mündet, in welchem vom Kühlgebläse des Motors ein Überdruck erzeugt wird.

Damit die Schmierstofförderung beim Nichtbetrieb der Kettensäge mit Sicherheit unterbrochen wird, ist ein Magnetventil 9 zwischen den Abschnitten 5 und 6 der Schmierstoffleitung vorgesehen, welches nur dann geöffnet ist, wenn dessen nicht dargestellter Erregerwicklung über Anschlussstecker 10 elektrischer Strom zugeführt wird. Das ist nur dann der Fall, wenn eine Bedienungsperson den Einschalter 11 der Kettensäge betätigt. Sobald die Kettensäge ausser Betrieb gesetzt wird, schliesst das Magnetventil 9 wieder und unterbricht somit die Schmierstoffzufuhr zur Kette. Auf diese Weise wird die Kette ohne Zutun der Bedienungsperson automatisch nur dann geschmiert, wenn es beim Betrieb erforderlich ist.

## Patentansprüche

1. Automatische Schmiervorrichtung für eine durch einen Elektromotor angetriebene Kettensäge, mit einem Schmierstoffvorratsbehälter und einer von diesem in die Nähe der Kette geführten Schmierstoffleitung, durch welche unter Einwirkung der Schwerkraft Schmierstoff aus dem Vorratsbehälter zur Kette gefördert wird, dadurch gekennzeichnet, dass in der Schmierstoffleitung (5, 6) ein Magnetventil (9) angeordnet ist, das durch das Einschalten des Elektromotors betätigt wird und dabei öffnet.

2. Automatische Schmiervorrichtung nach Anspruch 1, dadurch gekennzeichnet, dass die Erregerwicklung des Magnetventils durch Windungen einer isolierten elektrischen Zuleitung zum Motor gebildet ist.

## Revendications

1. Dispositif de lubrification automatique d'une scie à chaîne entraînée par un moteur électrique, ce dispositif comprenant un réservoir de lubrifiant at une canalisation qui part de ce réservoir et aboutit à proximité de la chaîne et dans laquelle le lubrifiant se déplace sous l'action de la pesanteur pour aller du réservoir à la chaîne, caractérisé en ce que la canalisation (5, 6) d'amenée du lubrifiant comporte une soupape magnétique (9) qui est actionnée lors de la mise en service du moteur électrique, ce qui provoque l'ouverture de cette soupape.

2. Dispositif de lubification automatique selon la revendication 1, caractérisé en ce que l'enroulement d'excitation de la soupape magnétique est formé par les spires d'une canalisation électrique isolée aboutissant au moteur.

## Claims

1. Automatic lubricating device, for a chain saw driven by an electrical motor, with a lubricant reserve container and a lubricant duct, which leads from this into the proximity of the chain and through which lubricant is conveyed under the effect of gravity from the reserve container to the chain, characterised thereby, that a magnetic valve (9), which is actuated by the switching-on of the electrical motor and in that case opens, is arranged in the lubricant duct (5, 6).

2. Automatic lubricating device, according to claim 1, characterised thereby, that the excitation winding of the magnetic valve is formed by windings of an insulated electrical feed line ot the motor.